# EUROPÄISCHE PATENTSCHRIFT

(11) **EP 3 182 183 B1**
(45) Veröffentlichungstag und Bekanntmachung des Hinweises auf die Patenterteilung: **29.09.2021**
(21) Anmeldenummer: 15200503.9
(22) Anmeldetag: 16.12.2015
(51) Int. Cl.: G02B 6/42

(54) **OPTISCHES MEHRKANAL-SENDE- UND/ODER EMPFANGSMODUL, INSBESONDERE FÜR HOCHBITRATIGE DIGITALE OPTISCHE SIGNALE**
OPTICAL MULTI-CHANNEL TRANSMISSION AND/OR RECEIVER MODULE, IN PARTICULAR FOR HIGH BIT RATE DIGITAL OPTICAL SIGNALS
MODULE EMETTEUR ET/OU RECEPTEUR MULTICANAUX OPTIQUE, EN PARTICULIER POUR DES SIGNAUX OPTIQUES NUMERIQUES HAUT DEBIT

(43) Veröffentlichungstag der Anmeldung: 21.06.2017
(73) Patentinhaber: ADVA Optical Networking SE, 98617 Meiningen (DE)
(72) Erfinder: Musk, Robert William, Kingsbridge, Devon TQ7 4PL (GB)
(74) Vertreter: Eder, Thomas

(56) Entgegenhaltungen:
- EP-A2- 2 675 025
- WO-A1-2015/038941
- US-A1- 2006 274 997
- US-A1- 2008 247 713
- US-A1- 2009 226 130
- None

## Beschreibung

Die Erfindung betrifft ein optisches Mehrkanal-Sende- und/oder Empfangsmodul, insbesondere für hochbitratige digitale optische Signale.

Mehrkanalige optische Sende- und/oder Empfangsmodule weisen üblicherweise zwei Schnittstellen auf: Über eine elektrische Schnittstelle werden die zu sendenden elektrischen Signale zugeführt und gegebenenfalls weitere Steuersignale bzw. Managementsignale für das Modul zu- und/oder abgeführt. Selbstverständlich kann die elektrische Schnittstelle auch die Spannungsversorgung des Moduls bereitstellen. Das Modul kann die ihm zugeführten elektrischen Signale noch in einer vorbestimmten Weise verarbeiten und die weiterverarbeiteten Signale jeweils einer Treibereinheit zuführen, welche das betreffende elektrische Kanalsignal jeweils einem zugeordneten elektrooptischen Sendeelement, beispielsweise einem Halbleiterlaser, zuführt. Das elektrooptische Sendeelement wandelt das diesem von der Treibereinheit zugeführte elektrische Signal in ein entsprechendes optisches Kanalsignal um und führt dieses einem optischen Ausgangsport des Moduls zu, wobei die optischen Ausgangsports des Moduls eine optische Schnittstelle bilden. Analog hierzu kann die optische Schnittstelle des Moduls mehrere optische Eingangsports aufweisen, wobei ein einem optischen Eingangsport zugeführtes optisches Signal jeweils einem zugeordneten optoelektrischen Empfangselement zugeführt wird, welches das optische Signal in ein entsprechendes elektrisches Signal wandelt. Das empfangene elektrische Signal wird einer Verstärkereinheit zugeführt, die das empfangene elektrische Signal verstärkt und zur weiteren Verarbeitung einer oder mehreren nachgeschalteten Einheiten, beispielsweise einer Takt-und Datenwiederaufbereitung (clock-and-data-recovery (CDR)), zuführt. Die verarbeiteten elektrischen Signale werden dann der elektrischen Schnittstelle zugeführt.

Die elektrische Schnittstelle kann selbstverständlich auch für das Zu- und/oder Abführen von Steuer- oder Managementsignalen ausgebildet sein, die für den Empfangszweig erforderlich sind. Die elektrische Schnittstelle kann auch eine separate Spannungsversorung für den Empfangszweig bereitstellen.

Bei der Entwicklung eines Designs für ein solches mehrkanaliges Sende- und/oder Empfangsmodul ist es erforderlich, die optischen Pfade zwischen den Ausgangsports der elektrooptischen Sendeelemente und den optischen Ausgangsports des Moduls bzw. den optischen Eingangsports des Moduls und den optischen Eingangsports der optoelektrischen Empfangselemente möglichst einfach und damit kostengünstig herstellbar und verlustarm zu gestalten. Es ist hierzu bekannt, die optischen Pfade durch eine Mehrzahl von optischen Wellenleitern, beispielsweise Glasfasern, zu realisieren, wobei die Enden der optischen Wellenleiter jeweils exakt in Bezug auf die Position der jeweiligen Ports der Sendeelemente bzw. Empfangselemente positioniert werden müssen. Zudem erfolgt die Ankopplung der Wellenleiterenden an die jeweiligen Ports der Sende- bzw. Empfangselemente häufig unter Verwendung von freien optischen Wegstrecken, innerhalb welcher keine Führung der optischen Signale mittels eines Wellenleiters erfolgt. Dies erfordert hermetische Gehäuse für derart ausgebildete mehrkanalige Sende- und/oder Empfangsmodule, was jedoch mit einem entsprechenden konstruktiven Aufwand verbunden ist.

Die durch die optischen Wellenleiter realisierten optischen Pfade werden dabei üblicherweise so gewählt, dass diese möglichst geradlinig verlaufen, um die Dämpfung der optischen Pfade durch Makrobiegungen der optischen Wellenleiter möglichst gering zu halten. Da optische Mehrkanal-Sende- und/oder Empfangsmodule häufig so ausgebildet sind, dass diese nach Bedarf in entsprechende Einschubplätze von übergeordneten Kommunikationsgeräten eingesetzt werden können, weisen die Mehrkanal-Sende-und/oder Empfangsmodule meist ein standardisiertes Gehäuse auf, das meist eine längliche, im Wesentlichen quaderförmige Struktur besitzt. An den jeweils kleinsten Stirnseiten sind die optische und die elektrische Schnittstelle vorgesehen. Die elektrische Schnittstelle ist dabei an derjenigen Stirnseite vorgesehen, welche in das übergeordnete Kommunikationsgerät hineinragt. An der gegenüberliegenden Stirnseite mit der optischen Schnittstelle können dann die jeweiligen externen Lichtwellenleiter angeschlossen werden.

In dem Gehäuse eines derartigen optischen Mehrkanal-Sende- und/oder Empfangsmoduls kann eine Baugruppe vorgesehen sein, beispielsweise in Form einer Leiterplatte, auf welcher sämtliche Komponenten angeordnet sind, die für das Senden und Empfangen der optischen Signale erforderlich sind. Zusätzlich können auf dieser Baugruppe auch sämtliche weiteren elektrischen bzw. elektronischen Komponenten vorgesehen sein, die für das Vorverarbeiten der zu sendenden (elektrischen) Signale und das Ansteuern der elektrooptischen Sendeelemente erforderlich sind, die die vorverarbeiteten (elektrischen) Signale in die entsprechenden optischen Signale umsetzen. Gleiches gilt auch für die elektrischen bzw. elektronischen Komponenten, die für das Weiterverarbeiten der von den optoelektrischen Empfangselementen empfangenen elektrischen Signale (d.h. der optisch-elektrisch gewandelten optischen Empfangssignale) erforderlich sind.

Diese Baugruppe bzw. die betreffende (meist gedruckte) Leiterplatte ist üblicherweise in der Längsrichtung des Gehäuses des Moduls angeordnet. Ein Ende der Leiterplatte in Längsrichtung kann dabei gleichzeitig als Steckkontakt für das Realisieren der elektrischen Schnittstelle ausgebildet sein.

Die elektrooptischen Sendeelemente bzw. optoelektrischen Empfangselemente sind dabei so auf der Baugruppe angeordnet, dass die optischen Wellenleiter zwischen der optischen Schnittstelle des Moduls, die üblicherweise als optische Steckereinheit am betreffenden Modulende ausgebildet ist, und den Sende- bzw. Empfangselementen im Wesentlichen geradlinig und in der Längsachse des Gehäuses bzw. parallel zur Ebene der gedruckten Leiterplatte der Baugruppe verlaufen.

Es ist auch möglich, diese Baugruppe in eine optoelektrische Baugruppe (diese wird im Folgenden als optoelektrisches Modul bezeichnet) und eine rein elektrische Baugruppe aufzuteilen. Die optoelektrische Baugruppe umfasst die elektrooptischen Sendeelemente bzw. die optoelektrischen Empfangselemente und gegebenenfalls weitere elektrische bzw. elektronische Komponenten, die mit möglichst geringem Abstand zu den Sende- bzw. Empfangselementen positioniert werden sollten, beispielsweise Treibereinheiten für die elektrooptischen Sendeelemente und elektrische Verstärkereinheiten für die optoelektrischen Empfangselemente. Dieses optoelektrische Modul wird über eine interne elektrische Schnittstelle mit der rein elektrischen Baugruppe verbunden, welche die weiteren, für die Vorverarbeitung bzw. Weiterverarbeitung der jeweiligen elektrischen Signale erforderlichen Komponenten aufweist.

Aus der US 2011/0216998 A1 ist eine optoelektrische Unterbaugruppe in Form eines optischen Wafers bekannt, bei welcher in einem transparenten, plattenförmigen (ebenen) Substrat eine Mehrzahl von optischen Pfaden zwischen den einander gegenüberliegenden Oberflächen des Substrat ausgebildet ist, wobei die optischen Pfade jeweils Schnittstellenflächen an den Substratoberflächen aufweisen, die exakt in Bezug auf entsprechende Referenzmarker positioniert sind. Zur Positionierung von elektrooptischen Sendeelementen bzw. optoelektrischen Empfangselementen in Bezug auf die Schnittstellenflächen der optischen Pfade sind mechanische Positioniermittel vorgesehen, die das Positionieren dieser Elemente relativ zu den Referenzmarkern ermöglichen, die auf der betreffenden Waferoberfläche vorgesehen sind. Damit können die optischen Ausgangsports der Sendeelemente bzw. die optischen Eingangsports der Empfangselemente exakt in Bezug auf die Schnittstellenflächen des jeweils zugeordneten optischen Pfades positioniert werden. In gleicher Weise sind auf der gegenüberliegenden Waferoberfläche mechanische Positioniermittel vorgesehen, die das Positionieren eines optischen Mehrfachverbinders in Bezug auf die Schnittstellenflächen der optischen Pfade ermöglichen. Auch hierzu sind auf dieser Waferoberfläche Referenzmarker vorgesehen, relativ zu welchen die Schnittstellenflächen der optischen Pfade positioniert sind. Durch das Ausrichten der mechanischen Positioniermittel, beispielsweise eine entsprechend gestaltete Ferrule eines Mehrfachverbinders, relativ zu den Referenzmarkern kann somit wiederum eine einfache Positionierung sämtlicher Wellenleiterenden in Bezug auf die Schnittstellenflächen der optischen Pfade erreicht werden.

Diese optoelektrische Unterbaugruppe ermöglicht somit das einfache Ankoppeln einer Mehrzahl von optischen Wellenleiterenden an elektrooptische Sendeelemente bzw. optoelektrische Empfangselemente, insbesondere von einer Mehrzahl von Sendeelementen bzw. Empfangselementen, die jeweils als Arrays ausgebildet sein können. Freie optische Wegstrecken werden hierbei vermieden.

Wird eine solche optoelektrische Unterbaugruppe verwendet, um ein optoelektrisches Modul für ein optisches Mehrkanal-Sende- und/oder Empfangsmodul zu realisieren, so könnte dieses in üblicher Weise mittels eines auf der rein elektrischen Baugruppe vorgesehenen Steckplatzes mit dieser verbunden werden. Das plattenförmige optoelektrische Modul würde dann im Wesentlichen senkrecht auf der Längserstreckungsebene der rein elektrischen Baugruppe stehen, die parallel zur Längsachse des Gehäuses verläuft.

Hierdurch würde gleichzeitig erreicht, dass die optischen Wellenleiter zur Verbindung des optoelektrischen Moduls und der Eingangs- bzw. Ausgangsports des Sende-und/oder Empfangsmoduls im Wesentlichen geradlinig bzw. mit nur geringen Krümmungen zwischen den jeweiligen Ein- und Ausgangsports geführt werden können (d.h. die Achsen der optischen Wellenleiter müssen nur mit relativ großen Krümmungsradien bei gleichzeitig kleinen Umschlingungswinkel gekrümmt werden). Somit ergibt sich eine minimale Länge der optischen Wellenleiter. Zudem ergibt sich durch den im Wesentlichen geradlinigen Verlauf keine bzw. eine vernachlässigbare Zusatzdämpfung durch Makro-Biegungen.

Da die Dimensionen eines solchen optoelektrischen Moduls infolge der Dimensionen der erforderlichen elektrooptischen Sendeelemente bzw. optoelektrischen Empfangselemente nicht beliebig klein gewählt werden können, muss das Gehäuse eines derartigen mehrkanaligen optischen Sende- und/oder Empfangsmoduls zumindest in dem Querschnittsbereich, in welchem das optoelektrische Modul angeordnet ist, eine Höhe bzw. lichte Weite aufweisen, die größer ist als die Abmessungen des plattenförmigen opto-elektronischen Moduls in der Ebene der "Platte", wenn dieses in diesem Querschnittsbereich des Gehäuses platziert wird.

Neuere Standards für optische Mehrkanal-Sende- und/oder Empfangsmodule, insbesondere derartige Module für die Erzeugung bzw. für den Empfang von hochbitratigen optischen Signalen, sehen jedoch Gehäuse mit immer kleineren Abmessungen vor. Die Integration der elektrischen und optoelektrischen Baugruppen bzw. Module in derart kleine Gehäuse stellt jedoch eine immer anspruchsvollere Aufgabe dar.

Ein optisches Mehrkanal-Sende- und/oder Empfangsmodul mit einem kompakten Design ist aus der US 2008/0247713 A1 bekannt, wobei in diesem Fall ein optisches Umlenkelement verwendet wird, das auf der Oberfläche eines optoelektrischen Moduls vorgesehen ist und den optischen Pfad der anzukoppelnden Faserenden, die im Gehäuse, ebenso wie das optoelektrische Modul, leicht geneigt gegenüber der Längsachse des Gehäuses vorgesehen sind, um 90° in Richtung auf einen auf der Oberfläche des optoelektrischen Moduls vorgesehenen Ankoppelbereich umlenken. Durch die leichte Schrägstellung des elektrischen Boards, auf dessen Oberfläche das optoelektrische Modul vorgesehen ist, ergibt sich der Vorteil, dass die Kante des elektrischen Boards gleichzeitig als in etwa zentrisch in der Höhe des Gehäuses liegender Stecker dienen kann. Das diesem Ende abgewandte Ende des elektrischen Boards liegt - bezogen auf die Gehäusehöhe - tiefer als die Mitte der Gehäusehöhe, so dass das optische Umlenkelement und ein daran vorgesehener Ankoppelbereich für einen optischen Mehrfachstecker in etwa mittig, bezogen auf die Gehäusehöhe, im Gehäuse liegt. Dieses Design eines optischen Mehrkanal-Sende- und/oder Empfangsmoduls erfordert jedoch ein optisches Umlenkmodul.

Der Erfindung liegt daher die Aufgabe zugrunde, ein optisches Mehrkanal-Sende-und/oder Empfangsmodul zu schaffen, das ein Gehäuse mit geringen Außenabmessungen, insbesondere einer geringen Höhe, aufweist und in welchem dennoch die erforderlichen elektrischen und optoelektrischen Baugruppen Platz finden. Zudem sollen bei dem Modul freie optische Pfade zwischen den Eingangsports bzw. den Ausgangsports des Moduls und den Ausgangsports der elektrooptischen Sendeelemente bzw. den Eingangsports der optoelektrischen Empfangselemente vermieden werden, so dass auf ein hermetisch ausgebildetes Gehäuse verzichtet werden kann. Das optische Mehrkanal-Sende- und/oder Empfangsmodul soll weiterhin ein einfaches Design aufweisen.

Die Erfindung löst diese Aufgabe mit den Merkmalen des Patentanspruchs 1.

Die Erfindung geht von der Erkenntnis aus, dass durch die Verwendung eines von einer weiteren, rein elektrischen Baugruppe getrennten optoelektrischen Moduls, auf oder in welchem die Mehrzahl von elektrooptischen Sendeelementen und/oder die Mehrzahl von optoelektrischen Empfangselementen angeordnet sind, welches einen auf einer seiner Oberflächen vorgesehenen optischen Ankoppelbereich aufweist, der mit jeweils ersten Enden einer Mehrzahl von optischen Wellenleitern verbunden ist, und welches eine Mehrzahl von optischen Pfaden zur optischen Verbindung jeweils eines ersten Endes eines der optischen Wellenleiter mit einem zugeordneten elektrooptischen Sendeelement und/oder einem zugeordneten optoelektrischen Empfangselement aufweist, ein optisches Mehrkanal-Sende- und/oder Empfangsmodul geschaffen werden kann, bei dem freie Pfade zwischen den optischen Eingangsports und/oder den optischen Ausgangsports des Gehäuses und der Mehrzahl von elektrooptischen Sendeelementen und/oder der Mehrzahl von optoelektrischen Empfangselementen vermieden werden.

Durch ein Anordnen des optoelektrischen Moduls in einer Modulebene, welche schräg zu einer Längsachse des Gehäuses verläuft, wird eine geringe Bauhöhe des Gehäuses bzw. das Anordnen eines solchen optoelektrischen Moduls in einem Gehäuse mit einer Bauhöhe ermöglicht, die kleiner ist als die Ausdehnung des plattenförmigen optoelektrischen Moduls in der Ebene seiner plattenförmigen Erstreckung.

Genauer ausgedrückt, wird durch die schräge Anordnung des optoelektrischen Moduls ermöglicht, dass die Innenhöhe des Gehäuses (in einem Querschnitt senkrecht zur Längsachse des Gehäuses) zumindest in einem axialen Bereich, in dem das optoelektrische Modul vorgesehen ist, in wenigstens einer Ebene aller Ebenen, die senkrecht zu einer gedachten Kippachse des optoelektrischen Moduls liegen, kleiner ist als die Längenausdehnung des Querschnitts des optoelektrischen Moduls in dieser Ebene. Üblicherweise wird man dabei die gedachte Kippachse des optoelektrischen Moduls senkrecht zur Längsachse des Gehäuses wählen, so dass die Kanten eines im Wesentlichen quaderförmigen Moduls parallel zu den betreffenden Kanten bzw. Flächen des Gehäuses verlaufen, welches häufig (zumindest im Bereich des optoelektrischen Moduls) ebenfalls quaderförmig ausgebildet ist.

Durch die Wahl eines geeigneten Schwenkwinkels (damit sei der jeweils kleinere Winkel zwischen der Längsachse des Gehäuses und der Modulebene bezeichnet) ergibt sich daher einerseits eine sehr geringe Bauhöhe des optischen Mehrkanal-Sende-und/oder Empfangsmoduls und andererseits ein immer noch relativ geringer Umschlingungswinkel der Krümmungen der optischen Wellenleiter zwischen dem optoelektrischen Modul und den optischen Eingangs- bzw. Ausgangsports des Gehäuses und ein ausreichend großer Krümmungsradius.

Nach einer Ausgestaltung der Erfindung weist die elektrische Baugruppe eine Trägerplatte für elektrische Komponenten auf, die parallel zur Längsachse des Gehäuses und parallel zu der gedachten Kippachse des optoelektrischen Moduls angeordnet ist. Die elektrische Verbindung zwischen einer internen elektrischen Schnittstelle der elektrischen Baugruppe und dem opto-elektronischen Moduls kann dabei vorzugsweise über eine flexible Leiterplatte erfolgen, die im Bereich de des Moduls auch als Trägerelement für elektrische bzw. elektronische Komponenten dienen kann. Hierzu kann die flexible Leiterplatte in einem Bereich, in welchem diese mit dem opto-elektronischen Modul verbunden ist, verstärkt ausgebildet sein. Die flexible elektrische Leiterplatte kann jedoch auch nur zur elektrischen Kontaktierung von elektrischen und/oder optoelektrischen bzw. elektrooptischen Komponenten ausgebildet sein, die auf dem opto-elektronischen Modul als Trägerelement angeordnet sind.

Nach einer bevorzugten Ausführungsform der Erfindung sind in oder auf dem optoelektrischen Modul zusätzlich eine oder mehrere elektrische Treibereinheiten für die elektrooptischen Sendeelemente und/oder eine oder mehrere elektrische Verstärkereinheiten zur Verstärkung der von den optoelektrischen Empfangselementen empfangenen elektrischen Signalen angeordnet. Hierdurch ergibt sich der Vorteil, dass diejenigen Komponenten, für die eine große örtliche Nähe mit den elektrooptischen Sendeeinheiten bzw. optoelektrischen Empfangseinheiten von Vorteil oder zwingend erforderlich ist, auch in dieser vorteilhaften Art und Weise angeordnet sind. Dies ist insbesondere bei optischen Mehrkanal-Sende- und/oder Empfangsmodulen für hohe Bitraten erforderlich.

Andererseits wird durch die zusätzliche Anordnung dieser Komponenten auf dem optoelektrischen Modul auch dessen erforderliche Baugröße vergrößert. Dies würde ohne die erfindungsgemäße schräge Anordnung des opto-elektronischen Moduls im Gehäuse, das heißt bei einer Anordnung senkrecht zur Längsachse des Gehäuses, eine entsprechende Bauhöhe erfordern.

Nach einer bevorzugten Ausführungsform der Erfindung weist das Gehäuse eine im Wesentlichen quaderförmige Struktur auf, wobei die Längsachse des Gehäuses parallel zu den längsten Seiten eines entsprechenden Quaders verläuft. Bei einem solchen Gehäuse kann es sich beispielsweise um ein Gehäuse nach den verschiedenen SFP Standards handeln, beispielsweise einem Gehäuse nach dem QSFP+ Standard.

Nach einer Ausgestaltung der Erfindung ist das optoelektrische Modul in der Richtung der Längsachse des Gehäuses neben der elektrischen Baugruppe angeordnet, wobei das optoelektrische Modul vorzugsweise benachbart zu den optischen Sende-bzw. Empfangsports des Gehäuses vorgesehen ist.

Erfindungsgemäß schließen die Längsachse des Gehäuses und die Modulebene einen Winkel α im Bereich 20° ≤ α ≤ 50° ein, vorzugsweise im Bereich 30° ≤ α ≤ 45°. Dies stellt jeweils einen guten bzw. hervorragenden Kompromiss zwischen der maximal erforderlichen Bauhöhe und dem maximal erforderlichen Umstellungswinkel bzw. minimal erforderlichen Biegeradius für die optischen Wellenleiter dar, welche das optoelektrische Modul mit den optischen Eingangs- bzw. Ausgangsports des Gehäuses verbinden.

Nach einer Ausgestaltung der Erfindung kann in einem Endbereich des Gehäuses, vorzugsweise dem Endbereich des Gehäuses, an welchem jeweils die längsten Seiten der quaderförmigen Struktur enden, ein Trägerelement vorgesehen sein, welches an einem zur betreffenden Stirnseite des Gehäuses zugewandten Ende zur Aufnahme einer optischen Mehrfachsteckereinheit und an einem gegenüberliegenden Ende zur schrägen Halterung des optoelektrischen Moduls ausgebildet ist, wobei der optische Ankoppelbereich des optoelektrischen Moduls mit den ersten Enden der optischen Wellenleiter verbunden ist und wobei zweite Enden der optischen Wellenleiter mit der optischen Mehrfachsteckereinheit verbunden sind.

Hierdurch ergibt sich ein einfacher Aufbau und, damit verbunden, eine einfache Montage der einzelnen Komponenten des optischen Sende- und/oder Empfangsmoduls.

Das Trägerelement kann dabei zwei im Wesentlichen parallel zu den längsten Seiten der quaderförmigen Struktur verlaufende Arme aufweisen, an welchen das optoelektrische Modul befestigt ist, wobei sich der optische Ankoppelbereich in einem Freiraum zwischen den beiden Armen befindet und die optischen Wellenleiter in diesem Freiraum geführt sind.

Das optoelektrische Modul ist erfindungsgemäß so ausgebildet, dass die ersten Enden der optischen Wellenleiter senkrecht mit dem Ankoppelbereich des optoelektrischen Moduls verbunden sind, vorzugsweise mittels einer Mehrfach-Ferrule, in welcher die Enden der optischen Wellenleiter in einer definierten Position relativ zueinander fixiert sind. Hierdurch ergibt sich eine einfache Ausgestaltung des opto-elektronischen Moduls und eine einfache Ankopplung der optischen Wellenleiter.

Die zweiten Enden der optischen Wellenleiter sind nach einer Ausgestaltung der Erfindung parallel zur Längsachse des Gehäuses verlaufend in der optischen Mehrfachsteckereinheit in einer definierten Position relativ zueinander fixiert, vorzugsweise mittels einer Mehrfach-Ferrule.

Nach einer Ausgestaltung der Erfindung können die optischen Wellenleiter als biegeunempfindliche Glasfasern ausgebildet sein, die im interessierenden Wellenlängenbereich eine geringe Makro-Biegeempfindlichkeit aufweisen, vorzugsweise eine Zusatzdämpfung, die bei einem Biegeradius von 5 mm und einem Umschlingungswinkel von 360° kleiner oder gleich 0,3 dB ist.

Wie im Stand der Technik üblich, können an einem dem Endbereich des Gehäuses, an welchem die optische Mehrfach-Steckereinheit vorgesehen ist, gegenüberliegenden Endbereich eine rein elektrische Steckereinrichtung mit einer Mehrzahl von elektrischen Kontakten vorgesehen sein, wobei die elektrischen Kontakte vorzugsweise integriert mit der Trägerplatte ausgebildet sind.

Nach einer bevorzugten Ausführungsform der Erfindung ist das optische Sende-und/oder Empfangsmodul als Transceivermodul mit einer Mehrzahl von elektrooptischen Sendeelementen und einer elektrische Treibereinheit hierfür und einer Mehrzahl von optoelektrischen Empfangselementen und einer elektrische Verstärkereinheit hierfür ausgebildet, wobei das Gehäuse vorzugsweise einen standardisierten Formfaktor aufweist, insbesondere nach dem QSFP (Quad Small Form-Factor Pluggable) und dem QSFP+ (Quad Small Form-Factor Pluggable plus) Standard.

Die Erfindung wird nachstehend anhand eines in der Zeichnung dargestellten Ausführungsbeispiels näher beschrieben. In der Zeichnung zeigen
- Fig. 1: eine perspektivische Ansicht eines optischen Mehrkanal-Sende- und/oder Empfangsmoduls nach der Erfindung;
- Fig. 2: eine perspektivische Ansicht des optischen Mehrkanal-Sende- und/oder Emp-fangsmoduls in Fig. 1 bei geöffnetem Gehäuse;
- Fig. 3: eine perspektivische Ansicht der wesentlichen Komponenten des optischen Mehrkanal-Sende- und/oder Empfangsmoduls in Fig. 1, wie sie in dessen Ge-häuse enthalten sind; und
- Fig. 4: einen Schnitt durch die Komponenten in Fig. 4 in der Längsmittelebene A.

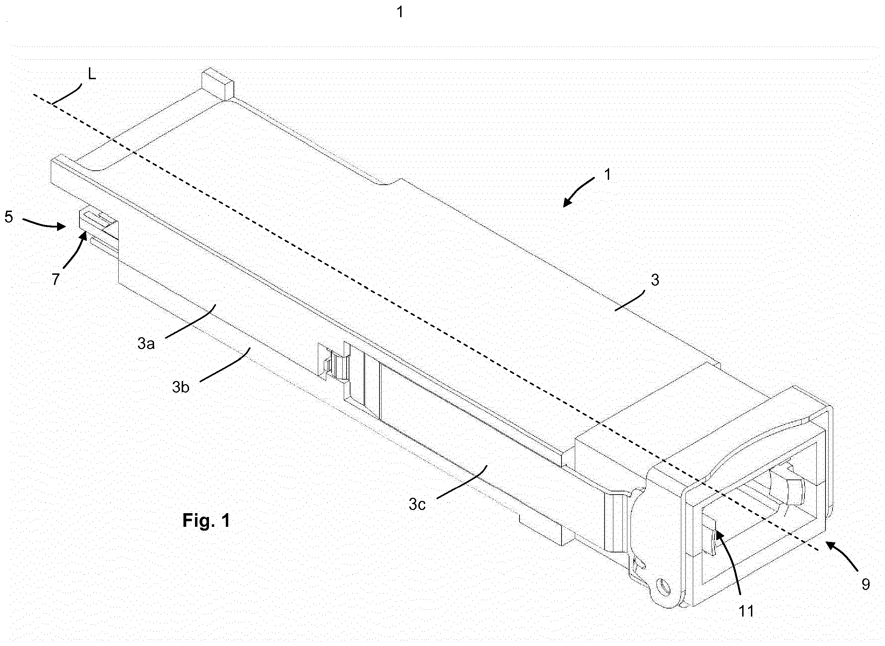

Fig. 1 zeigt ein optisches Mehrkanal-Sende- und/oder Empfangsmodul 1, welches ein Gehäuse 3 aufweist, das üblicherweise standardisierten Vorgaben entspricht. Beispielsweise kann es sich um ein Gehäuse nach dem CFP oder SFP, insbesondere dem SFP+ Standard handeln.

Das Gehäuse 3 weist eine längliche Struktur auf und kann, wie in Fig. 1 dargestellt, im Wesentlichen die Form eines länglichen Quaders besitzen. Das Gehäuse weist eine in seiner Längserstreckungsrichtung verlaufende Längsachse L auf.

Das optische Sende- und/oder Empfangsmodul 1 bzw. das Gehäuse 3 sind so ausgebildet, dass es in geeignete Steckplätze bzw. Einschubplätze einer übergeordneten Komponente oder Vorrichtung, beispielsweise eine einen Central Node (CN) oder einen Remote Node (RN) eines passiven optischen Netzwerks (PON) realisierende Vorrichtung eingesetzt werden kann.

Hierzu weist das optische Sende- und/oder Empfangsmodul 1 eine am rückwärtigen Ende des Gehäuses 3 vorgesehene elektrische Schnittstelle 5 auf, welche als elektrische Steckereinrichtung 7 ausgebildet ist. Das rückwärtige Ende des Gehäuses 3 bildet dabei die Mittel zur mechanischen Führung bzw. Zentrierung und Fixierung der Steckereinrichtung 7 in einer damit zusammenwirkenden komplementären Steckereinrichtung der übergeordneten Komponente oder Vorrichtung (nicht dargestellt).

Weiterhin weist das optische Sende- und/oder Empfangsmodul eine am vorderen Ende des Gehäuses 3 vorgesehene optische Schnittstelle 9 auf, die als optische Steckereinrichtung 11 ausgebildet ist. Die optische Steckereinrichtung ist als Mehrfachsteckereinrichtung ausgebildet, um für die Mehrzahl von optischen Kanälen eine Mehrzahl von optischen Wellenleitern (nicht dargestellt) an das optische Sende- und/oder Empfangsmodul anschließen zu können. Die optische Steckereinrichtung 11 definiert optische Eingangs- und/oder Ausgangsports des optischen Sende- und/oder Empfangsmoduls 1.

Dabei kann mit jedem optischen Wellenleiter ein einziger optischer Kanal realisiert sein. Das betreffende optische Empfangssignal, welches von dem optische Sende-und/oder Empfangsmodul 1 empfangen wird, und das optische Sendesignal, welches von dem optische Sende-und/oder Empfangsmodul 1 gesendet wird, können dabei in ein und demselben optischen Wellenleiter geführt werden. Üblicherweise wird man dabei für das optische Empfangssignal und das optische Sendesignal unterschiedliche Wellenlängen verwenden. Es ist jedoch ebenfalls möglich, für diese Signale dieselbe Wellenlänge zu verwenden, wenn Signalstörungen durch reflektierte oder rückgestreute Signalanteile vermieden oder bis zu einer zulässigen Schwelle toleriert werden können. Es ist jedoch selbstverständlich ebenfalls möglich, für das optische Empfangssignal und das optische Sendesignal jeweils dedizierte optische Wellenleiter zu verwenden. Auch in diesem Fall können für das optische Empfangssignal und das optische Sendesignal entweder unterschiedliche optische Wellenlängen oder identische Wellenlängen verwendet werden.

Schließlich ist es möglich, in einem oder mehreren der optischen Wellenleiter jeweils eine Mehrzahl von optischen Empfangssignalen und/oder optischen Sendesignalen in Form eines optischen Multiplex-Empfangssignals bzw. eines optischen Multiplex-Sendesignals zu führen. In diesem Fall müssen in dem optische Sende- und/oder Empfangsmodul 1 ein oder mehrere geeignete Demultiplexer und/oder Multiplexer vorgesehen sein, um die optischen Empfangssignale zu demultiplexen bzw. die optischen Sendesignale zu multiplexen.

Das vordere Ende des Gehäuses 3 bildet dabei ebenfalls die Mittel der optischen Steckereinrichtung 11 zur mechanischen Führung bzw. Zentrierung und Fixierung eines optischen Mehrfachsteckers im Gehäuse 3 (nicht dargestellt). Bei dem optischen Mehrfachstecker kann es sich beispielsweise um einen Multi Fiber Push-On (MPO) oder einen MTP (Mechanical Transfer Push-On) Stecker handeln, der gegenüber MPO Verbesserungen hinsichtlich optischer und mechanischer Qualität aufweist. So besteht im Gegensatz zum MPO-Stecker ein MTP-Stecker aus einem Gehäuse und einer separaten Mechanical Transfer (MT) Ferrule. Die MT-Ferrule ist eine Mehrfach-Ferrule für die optischen Wellenleiter, bei der die Ausrichtung der optischen Wellenleiter abhängig ist von der Exzentrizität und der Positionierung der optischen Wellenleiter sowie der Bohrungen von Zentrierstiften. Die Ausrichtung der optischen Wellenleiter wird dann beim Einfügeprozess in die Steckereinrichtung durch die Zentrierstifte gesteuert.

Wie aus den Figuren ersichtlich, kann das Gehäuse 3 im dargestellten Ausführungsbeispiel mehrteilig ausgebildet sein. Bei der dargestellten Ausführungsform eines Gehäuses 3 besteht das Gehäuse 3 aus einem Gehäuseoberteil 3a, einem Gehäuseunterteil 3b und zwei Seitenteilen 3c.

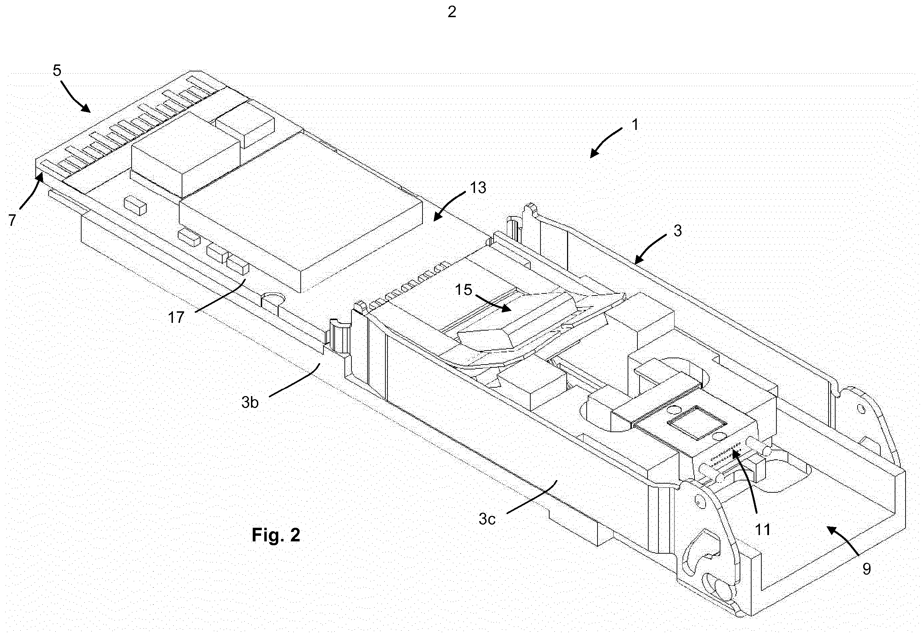

Fig. 2 zeigt das optische Sende- und/oder Empfangsmodul 1 bei geöffnetem Gehäuse, d.h. fehlendem Gehäuseoberteil 3a. Bei dem dargestellten Ausführungsbeispiel sind im Gehäuse 3 des optische Sende- und/oder Empfangsmoduls 1 neben der optischen Steckereinrichtung 11 eine elektrische Baugruppe 13 und ein plattenförmiges optoelektrisches Modul 15 angeordnet. Bei der elektrischen Baugruppe 13 handelt es sich vorzugsweise um eine Trägerplatte bzw. Leiterplatte 17, auf der eine Mehrzahl von rein elektrischen bzw. elektronischen Komponenten zur Verarbeitung der elektrischen Signale angeordnet ist. Bei den elektrischen Signalen kann es sich um diejenigen elektrischen Signale handeln, deren Informationsgehalt in Form von entsprechend elektrooptisch gewandelten optischen Sendesignalen über die Steckereinrichtung 11 auf die betreffenden optischen Wellenleiter abgegeben wird oder welche zur Ansteuerung von auf der Baugruppe 13 und/oder dem optoelektrischen Modul 15 angeordneten Komponenten erforderlich sind. In gleicher Weise kann es sich bei den elektrischen Signalen um diejenigen Signale handeln, welche den Informationsgehalt der optischen Empfangssignale beinhalten.

Das optoelektrisches Modul 15 beinhaltet optoelektrische Empfangselemente, beispielsweise in Form von Fotodioden-Arrays, sowie elektrische Verstärkereinheiten, beispielsweise Transimpedanzverstärker, zur Verstärkung der optisch-elektrisch gewandelten Empfangssignale, und/oder elektrooptische Sendeelemente, beispielsweise Laserdioden-Arrays, und eine oder mehrere elektrische Treibereinheiten für die elektrooptischen Sendeelemente. Durch die Nähe der elektrischen Treibereinheiten zu den elektrooptischen Sendeelementen bzw. der Verstärkereinheiten zu den optoelektrischen Empfangselementen werden lange Signalwege und damit gegebenenfalls verbundene Beeinträchtigungen der betreffenden Signale vermieden.

Zudem ergibt sich durch die Trennung der Empfangselemente und Sendeelemente sowie der unmittelbar zugeordneten elektrischen Einheiten ein modularer Aufbau, so dass derselbe Typ einer rein elektrischen Baugruppe 13 mit unterschiedlichen Typen von optoelektrischen Modulen 15 kombiniert werden kann, die beispielsweise unterschiedliche Anzahlen von Sendeelementen und/oder Empfangselementen oder verschieden ausgebildete Sendeelemente, insbesondere hinsichtlich der verwendeten Wellenlängen für die zu erzeugenden optischen Sendesignale, aufweisen können.

Das optoelektrische Modul 15 ist über eine elektrische Schnittstelle mit einer entsprechenden elektrischen Schnittstelle der rein elektrischen Baugruppe 13 verbunden.

Diese Verbindung kann beispielsweise mittels eines flexiblen Bandkabels 19 erfolgen. Das flexible Bandkabel 19 kann, wie bei der dargestellten Ausführungsform, auch fest mit dem optoelektrischen Modul 15 verbunden sein. Der mit dem optoelektrischen Modul 15 verbundene Teil des Bandkabels kann auch steifer ausgebildet sein, als der übrige Teil bzw. der übrige Bereich des Bankkabels 19. Damit kann dieser steifer ausgebildete Bereich des Bandkabels 19 als Leiterplatte dienen, auf welcher auch die entsprechenden Leiterbahnen zur Kontaktierung und Verschaltung der auf dem optoelektrischen Modul 15 vorgesehenen elektrischen bzw. elektronischen Komponenten bzw. der optoelektrischen Empfangselemente und der elektrooptischen Sendeelemente vorgesehen sein können. Diese Komponenten sind in den Fig. 2 bis 5 als Teilbereich 15a des optoelektrischen Moduls 15 dargestellt. Die einzelnen Komponenten können dabei mittels einer Vergussmasse hermetisch gegenüber der Umgebung gekapselt sein.

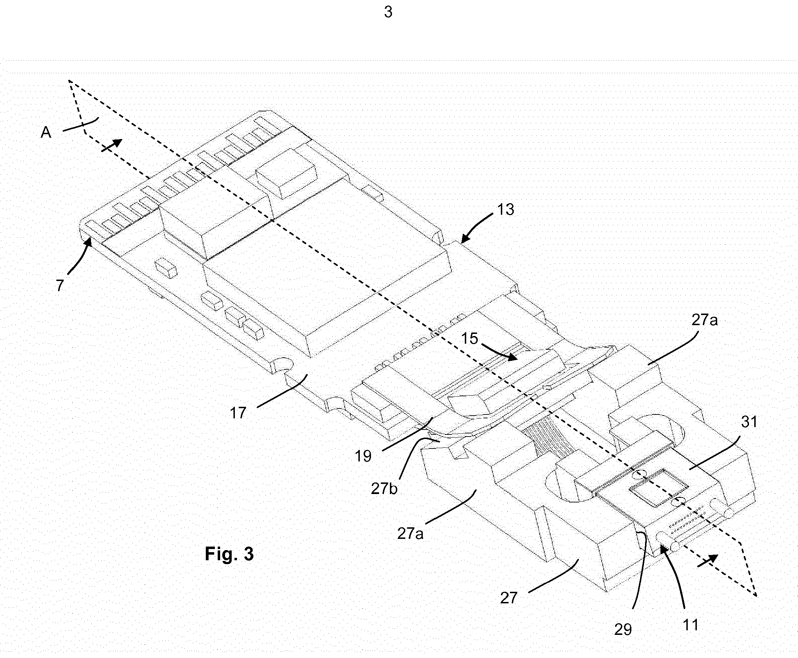

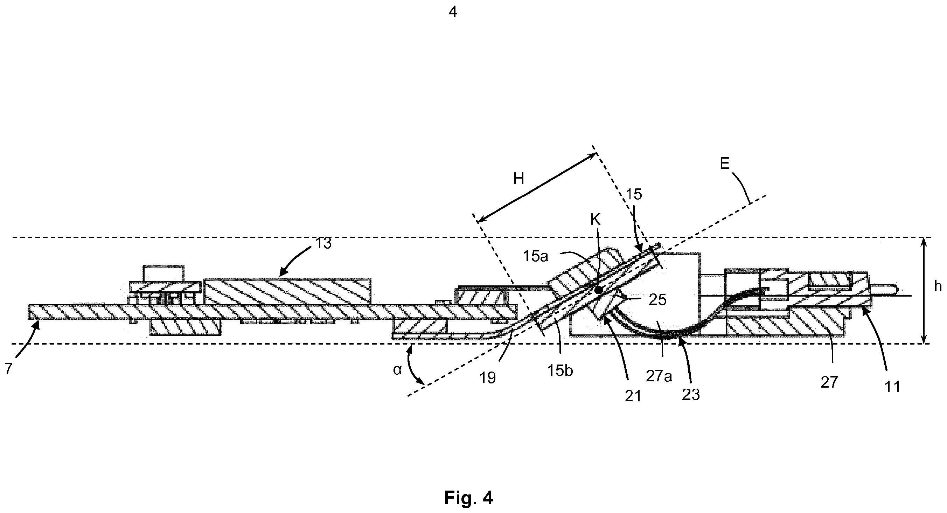

Wie aus den Fig. 3 und 4 ersichtlich, sind die vorgenannten Komponenten auf einer ersten der beiden (größeren) Oberflächen eines Substrats 15b des optoelektrischen Moduls 15 angeordnet. Auf der gegenüberliegenden zweiten (größeren) Oberfläche des Substrats 15b ist eine optische Mehrfachverbindereinrichtung 21 für eine Mehrzahl von optischen Wellenleitern 23 mit dem Substrat 15b verbunden. Die Verbindung kann dabei lösbar oder fest, beispielsweise als Verklebung, ausgebildet sein. Die Mehrfachverbindereinrichtung 21 kann dabei eine Mehrfach-Ferrule 25 umfassen, wie sie auch für optische Mehrfachstecker verwendet wird.

Die optische Mehrfachverbindereinrichtung 21 bzw. die Mehrfach-Ferrule 25 sind dabei so ausgestaltet, dass die darin fixierten Enden der optischen Wellenleiter 23 im Wesentlichen senkrecht auf der vorzugsweise rechteckigen Oberfläche des plattenförmigen Substrats 15b stehen. Selbstverständlich ist es ebenfalls möglich, dass die Achsen der Wellenleiter 23 auch um einen kleinen Winkel von wenigen Grad von der Senkrechten abweichend mit dem Substrat 15b verbunden sind.

Das Substrat 15b umfasst eine Mehrzahl von optischen Pfaden, welche auf der zweiten Oberfläche des Substrats 15b ausgebildete zweite optische Ports mit ersten optischen Ports verbinden, die auf der ersten Oberfläche des Substrats 15b vorgesehen sind. Die optische Mehrfachverbindereinrichtung 21 ist dabei so ausgebildet, dass die Stirnseiten der optischen Wellenleiter 23 jeweils einem der zweiten optischen Ports gegenüberliegen, so dass sich eine optische Verbindung mit ausreichend geringer Dämpfung ergibt.

Die auf der ersten Oberfläche des Substrats 15b vorgesehenen elektrooptischen Sendeelemente sind so ausgebildet, dass die von diesen erzeugten optischen Signale in einer Richtung senkrecht zur Oberfläche des Substrats 15b abgegeben werden. Die elektrooptischen Sendeelemente sind so positioniert, dass deren Ausgangsports jeweils einem der ersten optischen Ports des Substrats 15b gegenüberliegen. Die Positionierung muss dabei selbstverständlich so genau erfolgen, dass eine ausreichend geringe Dämpfung der optischen Sendesignale gegeben ist. Bei den optischen Sendeelementen kann es sich insbesondere um Vertical-Cavity Surface-Emitting (VCSEL) Laserdioden (VCSEL), insbesondere um VCSEL-Arrays handeln.

In gleicher Weise sind die auf der ersten Oberfläche des Substrats 15b angeordneten optoelektrischen Empfangselemente mit ihren fotoempfindlichen Flächen so positioniert, dass diese jeweils einem der ersten optischen Ports des Substrats 15b gegenüberliegen.

Die optischen Verbindungen zwischen dem Substrat 15b und den optoelektrischen Empfangselementen bzw. den elektrooptischen Sendeelementen weisen dabei keinerlei freie optische Strecken auf. Es besteht daher keine Gefahr, dass die optischen Signale durch Verschmutzungen der einander gegenüberstehenden Flächen der Sendeelemente bzw. Empfangselemente und der ersten bzw. zweiten Ports beeinträchtigt, insbesondere gedämpft werden. Der Begriff "Verschmutzung" soll dabei auch Wassertröpfchen bzw. eine Wasserschicht umfassen, die sich bei einem Unterschreiten des Taupunkts durch den in der umgebenden Atmosphäre enthaltenen Wasserdampf auf den betreffenden Flächen niederschlagen können.

Reflexionen können durch immertierte Verbindungen weitestgehend vermieden werden, beispielsweise mittels transparenter Klebstoffe, die im Wesentlichen denselben Brechungsindex aufweisen, wie die optischen Wellenleiter 23 bzw. die im Substrat 15b ausgebildeten optischen Pfade.

Grundsätzlich kann das Substrat 15b auch so ausgebildet sein, dass verzweigende optische Pfade vorgesehen sind, um optische Splitter oder Combiner zu realisieren. Es ist ebenfalls möglich, weitere optische Einheiten bzw. Funktionalitäten in dem Substrat 15b bzw. im Verlauf der optischen Pfade zu integrieren, beispielsweise optische Multiplexer bzw. Demultiplexer, Zirkulatoren oder Isolatoren.

Im einfachsten Fall wird man die optischen Pfade so ausgestalten, dass zwischen jedem ersten und zweiten Port genau ein optischer Pfad verläuft. Dieser optische Pfad kann dann vorzugsweise einem optischen Empfangssignal bzw. einem optischen Sendesignal, d.h. jeweils nur einer einzigen Übertragungsrichtung, zugeordnet sein. In diesem Fall ist dann selbstverständlich auch jeder der optischen Wellenleiter 23 jeweils nur einer einzigen Übertragungsrichtung zugeordnet.

Wie aus den Fig. 3 und 4 ersichtlich, definieren die optischen Wellenleiter 23 optische Pfade zwischen der Mehrfachverbindungseinrichtung 21 und der optischen Steckereinrichtung 11 des optischen Mehrkanal-Sende- und/oder Empfangsmoduls 1.

Unter Berücksichtigung der Ausbildung des plattenförmigen optoelektrischen Moduls 15 wäre es am günstigsten, das optoelektrische Modul 15 mit seiner Modulebene E senkrecht zur Längsachse L des optischen Mehrkanal-Sende- und/oder Empfangsmoduls 1 auszurichten, um die Krümmungen der optischen Wellenleiter 23 bzw. der durch diese definierten optischen Pfade zu minimieren. Denn derartige Krümmungen führen mit abnehmendem Krümmungsradius und zunehmenden Umschlingungswinkel zu einem Ansteigen der durch diese Pfade verursachten optischen Dämpfung. Angesichts der aus Fig. 4 erkennbaren Ausbildung der optischen Steckereinrichtung 11, bei welcher die optischen Achsen der Enden der darin fixierten optischen Wellenleiter 23 parallel zur Längsachse L verlaufen, könnte bei einem senkrechten Ausrichten des optoelektrischen Moduls 15 ein über die gesamte Länge geradliniger Verlauf der optischen Wellenleiter 23 erreicht werden.

In der Praxis wird jedoch eine gewisse Mindestabmessung des optoelektrischen Moduls 15 in der Modulebene E benötigt. Diese Mindestabmessungen werden durch die Anzahl der erforderlichen optischen Pfade und insbesondere durch die Anzahl und Abmessungen der elektrooptischen Sendeelemente und optoelektrischen Empfangselemente sowie der diesen zugeordneten Treibereinheiten und Verstärkereinheiten definiert. Angesichts immer höherer Anforderungen an die maximale Baugröße eines derartigen optischen Mehrkanal-Sende- und/oder Empfangsmoduls 1 besteht jedoch das Problem, dass derart ausgebildete optoelektrische Module 15 in der Modulebene E Abmessungen aufweisen, die größer sind als die entsprechenden Innenabmessungen des Gehäuses 3, d.h. die betreffenden Abmessungen in Querschnittsebenen (senkrecht zur Längsachse L) des Gehäuses 3, zumindest in demjenigen axialen Bereich des Gehäuses 3, in welchem das optoelektrische Modul 15 angeordnet werden soll.

Daher ist bei der in den Figuren dargestellten Ausführungsform eines optischen Mehrkanal-Sende- und/oder Empfangsmoduls 1 das optoelektrische Modul schräg zur Längsachse L des Gehäuses 3 angeordnet. Hierdurch ist es möglich, ein optoelektrisches Modul 15 im Gehäuse 3 unterzubringen, welches in dem betreffenden axialen Abschnitt des Gehäuses 3 in zumindest einer Ebene aller Ebenen, die senkrecht auf einer gedachten Kippachse K liegen, eine lichte Weite h (d.h. eine kleinere Innenhöhe bzw. einen kleineren Abstand der betreffenden Innenwandungen des Gehäuses senkrecht zur Längsachse L) aufweist, die kleiner ist als die Ausdehnung des plattenförmigen optoelektrischen Moduls 15 im Einbauzustand. Anders ausgedrückt, die Ausdehnung des optoelektrischen Moduls 15 ist in der Schnittgeraden der Modulebene mit der betreffenden Ebene, die senkrecht zur Kippachse K verläuft, größer als die lichte Weite des Gehäuses in dieser Ebene (in dem betreffenden axialen Abschnitt).

Bei der in Fig. 4 dargestellten Ausführungsform eines quaderförmigen Gehäuses mit einer im Wesentlichen konstanten Innenhöhe bzw. lichten Weite h ist das optoelektrische Modul 15 um eine Kippachse K verkippt im Gehäuse 3 angeordnet, die senkrecht zur Längsachse L verläuft. In der Modulebene weist das optoelektrische Modul 15 die Ausdehnung bzw. Länge H auf. Die Modulebene, in welcher sich das optoelektrische Modul 15 erstreckt, ist gegenüber der Längsachse L um einen Winkel α verkippt. Der Winkel α liegt vorzugsweise im Bereich 20° ≤ α ≤ 50° und höchst vorzugsweise im Bereich 30° ≤ α ≤ 45°. Die oberen und unteren Innenwandungen des Gehäuses sind dabei durch die gestrichelten Linien oberhalb und unterhalb des optoelektrischen Moduls 15 bzw. der im Gehäuseinneren vorgesehenen Komponenten angedeutet.

Wie aus Fig. 4 ersichtlich, ist die elektrische Baugruppe 13 bzw. deren Leiterplatte 17 in einer Ebene angeordnet, welche parallel zur Längsachse L und zur Kippachse K verläuft bzw. welche durch die Richtungsvektoren dieser Achsen aufgespannt wird.

Durch die Verwendung und schräge Anordnung eines derart ausgebildeten optoelektrischen Moduls 15 wird, wie vorstehend ausgeführt, erreicht, dass im optischen Pfad zwischen der optischen Steckereinrichtung 11 und den optoelektrischen Empfangselementen bzw. den elektrooptischen Sendeelementen keine freie optische Wegstrecke vorliegt und demzufolge auf ein hermetisches Gehäuse 3 verzichtet werden kann und dass dennoch ein Gehäuse 3 verwendet werden kann, dessen Innenhöhe im Bereich des optoelektrischen Moduls 15 kleiner ist als die Ausdehnung des optoelektrischen Moduls 15 in der Modulebene.

Dies wird erkauft durch einen in zulässiger Weise gekrümmten optischen Pfad, welcher durch die optischen Wellenleiter 23 definiert ist. Um unzulässig hohe Dämpfungen zu vermeiden, werden für die optischen Wellenleiter 23 spezielle, biegeunempfindliche Wellenleiter bzw. Glasfasern verwendet. Zudem wird vorzugsweise zusätzlich ein optimaler Kompromiss zwischen der Neigung bzw. Verkippung des optoelektrischen Moduls 15 und der hierdurch verursachten Krümmung des optischen Pfades der Wellenleiter 23 gesucht.

Wie in den Figuren gezeigt, ist zur Halterung einer Steckereinheit 31 der optischen Steckereinrichtung 11 im vorderen Bereich des Gehäuses 3 ein U-förmiges Trägerelement 27 vorgesehen, welches zwei Arme 27a aufweist, die sich in Richtung der Längsachse L erstrecken. Im vorderen Bereich weist das Trägerelement 27 eine Ausnehmung auf 29, in welcher eine die Steckereinheit 31 bildende Mehrfach-Ferrule eingesetzt und gehalten ist.

Die Endbereiche der Arme weisen schräge Flächen 27b auf, die zum Abstützen und Fixieren des plattenförmigen optoelektrischen Moduls 15 dienen. In den Flächen 27b können, wie in Fig. 3 dargestellt, auch Ausnehmungen vorgesehen sein, um die Mehrfach-Ferrule bzw. die Steckereinheit 31 aufzunehmen, wenn diese breiter ist als der Abstand der Arme 27a. Auf diese Weise kann die Halterung bzw. Fixierung des Moduls 15 verbessert werden. Die Fixierung kann auch durch entsprechende Klemmelemente vervollständigt werden, die an der Innenwandung des Gehäuseoberteils vorgesehen sind, so dass beim Aufsetzen des Gehäuses das Modul 15 in seiner schrägen Position fixiert wird. Auch die übrigen Komponenten, wie die elektrische Baugruppe 13 und die Steckereinrichtung 11, können auf diese Weise im Gehäuse fixiert werden. Es sind jedoch auch andere Halte- oder Fixiermittel möglich, wie beispielsweise ein Verschrauben oder Verkleben oder Verrasten der Komponenten.

Wie in den Fig. 3 und 4 gezeigt, verlaufen die optischen Wellenleiter 23 im Bereich zwischen den beiden Armen 27a. Auf diese Weise bleibt genügend Platz, um die Wellenleiter 23 mit möglichst großen Biegeradien und möglichst kleinem Umschlingungswinkel verlegen zu können.

### Bezugszeichenliste

- 1: optisches Mehrkanal-Sende- und/oder Empfangsmodul
- 3: Gehäuse
- 3a: Gehäuseoberteil
- 3b: Gehäuseunterteil
- 3c: Seitenteil
- 5: elektrische Schnittstelle
- 7: elektrische Steckereinrichtung
- 9: optische Schnittstelle
- 11: optische Steckereinrichtung
- 13: (rein) elektrische Baugruppe
- 15: optoelektrisches Modul
- 15a: Teilbereich des optoelektrischen Moduls mit elektrooptischen Sendeelemen-ten und optoelektrischen Empfangselementen sowie elektrischen Verstärke-reinheiten und elektrischen Treibereinheiten
- 15b: Substrat
- 17: Leiterplatte
- 19: Bandkabel
- 21: Mehrfachverbindereinrichtung
- 23: optische Wellenleiter
- 25: Mehrfach-Ferrule
- 27: Trägerelement
- 27a: Arme
- 29: Ausnehmung
- 31: Steckereinheit (Mehrfach-Ferrule)

- L: Längsachse
- A: Längsmittelebene
- E: Modulebene
- K: Kippachse

## Patentansprüche

1. Optisches Mehrkanal-Sende- und/oder Empfangsmodul, insbesondere für hochbitratige digitale optische Signale,
(a) mit einem Gehäuse (3), welches eine Mehrzahl von optischen Eingangsports und/oder optischen Ausgangsports aufweist und in welchem eine elektrische Baugruppe (13) und ein elektrisch mit der elektrischen Baugruppe (13) verbundenes, im Wesentlichen plattenförmiges optoelektrisches Modul (15) vorgesehen sind,
(b) wobei in oder auf dem optoelektrischen Modul (15) eine Mehrzahl von elektrooptischen Sendeelementen und/oder eine Mehrzahl von optoelektrischen Empfangselementen angeordnet ist,
(c) wobei das optoelektrische Modul (15) einen optischen Ankoppelbereich aufweist, welcher mit jeweils ersten Enden einer Mehrzahl von optischen Wellenleitern (23) verbunden ist, und wobei das optoelektrische Modul (15) eine Mehrzahl von optischen Pfaden zur optischen Verbindung jeweils eines ersten Endes eines der optischen Wellenleiter (23) mit einem zugeordneten elektrooptischen Sendeelement und/oder einem zugeordneten optoelektrischen Empfangselement aufweist, und
(d) wobei das optoelektrische Modul (15) in einer Modulebene (E) angeordnet ist, welche schräg zu einer Längsachse (L) des Gehäuses (3) verläuft,
(e) wobei die Längsachse (L) des Gehäuses (3) und die Modulebene (E) einen Winkel α im Bereich 20° ≤ α ≤ 50° einschließen, und
(f) wobei die Innenhöhe (h) des Gehäuses (3) zumindest in einem axialen Bereich, in dem das optoelektrische Modul (15) vorgesehen ist, in wenigstens einer Ebene aller Ebenen, die senkrecht zu einer gedachten Kippachse (K) des optoelektrischen Moduls (15) stehen, kleiner ist als die Längenausdehnung des Querschnitts des optoelektrischen Moduls (15) in dieser Ebene,
**dadurch gekennzeichnet**,
(g) dass der optische Ankoppelbereich auf einer der beiden größeren Oberflächen des optoelektrischen Moduls (15) vorgesehen ist und
(h) dass die ersten Enden der optischen Wellenleiter (23) senkrecht mit dem Ankoppelbereich des optoelektrischen Moduls (15) verbunden sind.

2. Optisches Sende- und/oder Empfangsmodul nach Anspruch 1, **dadurch gekennzeichnet, dass** die elektrische Baugruppe (13) eine Trägerplatte (17) für elektrische Komponenten aufweist, welche in der oder parallel zur Längsachse (L) des Gehäuses (3) und parallel zu der gedachten Kippachse (K) des optoelektrischen Moduls (15) angeordnet ist.

3. Optisches Sende- und/oder Empfangsmodul nach Anspruch 1 oder 2, **dadurch gekennzeichnet, dass** in oder auf dem optoelektrischen Modul (15) zusätzlich eine oder mehrere elektrische Treibereinheiten für die elektrooptischen Sendeelemente und/oder eine oder mehrere elektrische Verstärkereinheiten zur Verstärkung der von den optoelektrischen Empfangselementen empfangenen elektrischen Signale angeordnet sind.

4. Optisches Sende- und/oder Empfangsmodul nach einem der vorhergehenden Ansprüche, **dadurch gekennzeichnet, dass** das Gehäuse (3) eine im Wesentlichen quaderförmige Struktur aufweist, wobei die Längsachse (L) des Gehäuses (3) parallel zu den längsten Seiten eines entsprechenden Quaders verläuft.

5. Optisches Sende- und/oder Empfangsmodul nach einem der vorhergehenden Ansprüche, **dadurch gekennzeichnet, dass** die Kippachse (K) des optoelektrischen Moduls (15) senkrecht zur Längsachse (L) des Gehäuses (3) verläuft.

6. Optisches Sende- und/oder Empfangsmodul nach einem der vorhergehenden Ansprüche, **dadurch gekennzeichnet, dass** das optoelektrische Modul (15) in der Richtung der Längsachse (L) des Gehäuses (3) neben der elektrischen Baugruppe (13) angeordnet ist.

7. Optisches Sende- und/oder Empfangsmodul nach einem der vorhergehenden Ansprüche, **dadurch gekennzeichnet, dass** die Längsachse (L) des Gehäuses (3) und die Modulebenen (E) einen Winkel α im Bereich 30° ≤ α ≤ 45° einschließen.

8. Optisches Sende- und/oder Empfangsmodul nach einem der Ansprüche 4 bis 6, **dadurch gekennzeichnet, dass** in einem Endbereich des Gehäuses (3), vorzugsweise dem Endbereich des Gehäuses (3), an welchem jeweils die längsten Seiten der quaderförmigen Struktur enden, ein Trägerelement (27) vorgesehen ist, welches an einem zur betreffenden Stirnseite des Gehäuses (3) zugewandten Ende zur Aufnahme einer optischen Mehrfachsteckereinheit (31) und an einem gegenüberliegenden Ende zur schrägen Halterung des optoelektrischen Moduls (15) ausgebildet ist, wobei der optische Ankoppelbereich des optoelektrischen Moduls (15) mit den ersten Enden der optischen Wellenleiter (23) verbunden ist und wobei zweite Enden der optischen Wellenleiter (23) mit der optischen Mehrfachsteckereinheit (31) verbunden sind.

9. Optisches Sende- und/oder Empfangsmodul nach Anspruch 8, **dadurch gekennzeichnet, dass** das Trägerelement (27) zwei im Wesentlichen parallel zu den längsten Seiten der quaderförmigen Struktur verlaufende Arme (27a) aufweist, an welchen das optoelektrische Modul (15) befestigt ist, wobei sich der optische Ankoppelbereich in einem Freiraum zwischen den beiden Armen befindet und die optischen Wellenleiter (23) in diesem Freiraum geführt sind.

10. Optisches Sende- und/oder Empfangsmodul nach einem der vorhergehenden Ansprüche, **dadurch gekennzeichnet, dass** die ersten Enden der optischen Wellenleiter (23) mittels einer Mehrfach-Ferrule (25) mit dem Ankoppelbereich der optoelektrischen Moduls (15) verbunden sind, in welcher die Enden der optischen Wellenleiter (23) in einer definierten Position relativ zueinander fixiert sind.

11. Optisches Sende- und/oder Empfangsmodul nach einem der Ansprüche 8 bis 10, soweit Anspruch 10 auch auf Anspruch 8 rückbezogen ist, **dadurch gekennzeichnet, dass** die zweiten Enden der optischen Wellenleiter (23) parallel zur Längsachse (L) des Gehäuses verlaufend in der optischen Mehrfachsteckereinheit (31) in einer definierten Position relativ zueinander fixiert sind, vorzugsweise mittels einer Mehrfach-Ferrule (31).

12. Optisches Sende- und/oder Empfangsmodul nach einem der vorhergehenden Ansprüche, **dadurch gekennzeichnet, dass** die optischen Wellenleiter (23) als Glasfasern ausgebildet sind, die im interessierenden Wellenlängenbereich eine geringe Makro-Biegeempfindlichkeit aufweisen, vorzugsweise eine Zusatzdämpfung, die bei einem Biegeradius von 5 mm und einem Umschlingungswinkel von 360° kleiner oder gleich 0,3 dB ist.

13. Optisches Sende- und/oder Empfangsmodul nach einem der Ansprüche 8, 9 oder 11 oder einem der Ansprüche 10 oder 12, soweit diese auch auf Anspruch 8 rückbezogen sind, **dadurch gekennzeichnet, dass** an einem dem Endbereich des Gehäuses (3), an welchem die optische Mehrfach-Steckereinheit (31) vorgesehen ist, gegenüberliegenden Endbereich eine rein elektrische Steckereinrichtung (7) mit einer Mehrzahl von elektrischen Kontakten vorgesehen ist, wobei die elektrischen Kontakte vorzugsweise integriert mit der Trägerplatte (17) ausgebildet sind.

14. Optisches Sende- und/oder Empfangsmodul nach einem der vorhergehenden Ansprüche, **dadurch gekennzeichnet, dass** dieses als Transceivermodul mit einer Mehrzahl von elektrooptischen Sendeelementen und einer oder mehreren elektrischen Treibereinheiten hierfür und einer Mehrzahl von optoelektrischen Empfangselementen und einer oder mehreren elektrische Verstärkereinheiten ausgebildet ist und dass das Gehäuse einen standardisierten Formfaktor aufweist, insbesondere nach dem QSFP (Quad Small Form-Factor Pluggable) oder dem QSFP+ (Quad Small Form-Factor Pluggable plus) Standard.

## Claims

1. Optical multi-channel transmitter and/or receiver module, in particular for high bit rate digital optical signals,
(a) with a housing (3), which has a plurality of optical input ports and/or optical output ports and in which an electric assembly (13) and a substantially board-shaped optoelectric module (15) electrically connected to the electric assembly (13) are provided,
(b) wherein a plurality of electro-optical transmitter elements and/or a plurality of optoelectric receiver elements is arranged in or on the optoelectric module (15),
(c) wherein the optoelectric module (15) has an optical coupling area which is connected to respective first ends of a plurality of optical waveguides (23), and wherein the optoelectric module (15) has a plurality of optical paths for the optical connection of a respective first end of one of the optical waveguides (23) to an assigned electro-optical transmitter element and/or an assigned optoelectric receiver element, and
(d) wherein the optoelectric module (15) is arranged in a module plane (E), which runs at an angle to a longitudinal axis (L) of the housing (3),
(e) wherein the longitudinal axis (L) of the housing (3) and the module plane (E) enclose an angle α in the range 20° ≤ α ≤ 50°, and
(f) wherein the internal height (h) of the housing (3), at least in an axial area in which the optoelectric module (15) is provided, in at least one plane of all planes which are perpendicular to an imaginary tilt axis (K) of the optoelectric module (15), is smaller than the longitudinal extent of the cross section of the optoelectric module (15) in that plane,
characterized
(g) in that the optical coupling area is provided on one of the two larger surfaces of the optoelectric module (15) and
(h) in that the first ends of the optical waveguides (23) are connected perpendicularly to the coupling area of the optoelectric module (15).

2. Optical transmitter and/or receiver module according to claim 1, **characterized in that** the electric assembly (13) has a carrier plate (17) for electrical components, which is arranged in the or parallel to the longitudinal axis (L) of the housing (3) and parallel to the imaginary tilt axis (K) of the optoelectric module (15).

3. Optical transmitter and/or receiver module according to claim 1 or 2, **characterized in that** in addition one or more electric driver units for the electro-optical transmitter elements and/or one or more electric amplifier units for amplifying the electrical signals received by the optoelectric receiver elements are arranged in or on the optoelectric module (15).

4. Optical transmitter and/or receiver module according to one of the preceding claims, **characterized in that** the housing (3) has a substantially cuboid-shaped structure, wherein the longitudinal axis (L) of the housing (3) runs parallel to the longest sides of a corresponding cuboid.

5. Optical transmitter and/or receiver module according to one of the preceding claims, **characterized in that** the tilt axis (K) of the optoelectric module (15) runs perpendicular to the longitudinal axis (L) of the housing (3).

6. Optical transmitter and/or receiver module according to one of the preceding claims, **characterized in that** the optoelectric module (15) is arranged next to the electric assembly (13) in the direction of the longitudinal axis (L) of the housing (3).

7. Optical transmitter and/or receiver module according to one of the preceding claims, **characterized in that** the longitudinal axis (L) of the housing (3) and the module plane (E) enclose an angle α in the range 30° ≤ α ≤ 45°.

8. Optical transmitter and/or receiver module according to one of claims 4 to 6, **characterized in that**, in an end area of the housing (3), preferably the end area of the housing (3) in which the longest sides of the cuboid-shaped structure end in each case, a carrier element (27) is provided which is formed at an end, facing the end face in question of the housing (3), for receiving an optical multi-plug unit (31) and at an opposite end for holding the optoelectric module (15) at an angle, wherein the optical coupling area of the optoelectric module (15) is connected to the first ends of the optical waveguides (23) and wherein second ends of the optical waveguides (23) are connected to the optical multi-plug unit (31).

9. Optical transmitter and/or receiver module according to claim 8, **characterized in that** the carrier element (27) has two arms (27a) running substantially parallel to the longest sides of the cuboid-shaped structure, to which the optoelectric module (15) is attached, wherein the optical coupling area is located in a free space between the two arms and the optical waveguides (23) are guided in this free space.

10. Optical transmitter and/or receiver module according to one of the preceding claims, **characterized in that** the first ends of the optical waveguides (23) are connected to the coupling area of the optoelectric module (15) by means of a multi-ferrule (25), in which the ends of the optical waveguides (23) are fixed in a defined position relative to each other.

11. Optical transmitter and/or receiver module according to one of claims 8 to 10, where claim 10 also refers back to claim 8, **characterized in that** the second ends of the optical waveguides (23), running parallel to the longitudinal axis (L) of the housing, are fixed in the optical multi-plug unit (31) in a defined position relative to each other, preferably by means of a multi-ferrule (31).

12. Optical transmitter and/or receiver module according to one of the preceding claims, **characterized in that** the optical waveguides (23) are formed as glass fibres, which in the wavelength range of interest have a low macrobending sensitivity, preferably an additional attenuation, which is less than or equal to 0.3 dB with a bending radius of 5 mm and a wrap angle of 360°.

13. Optical transmitter and/or receiver module according to one of claims 8, 9 or 11 or one of claims 10 or 12, where these also refer back to claim 8, **characterized in that**, in an end area lying opposite the end area of the housing (3) in which the optical multi-plug unit (31) is provided, a purely electric plug device (7) with a plurality of electrical contacts is provided, wherein the electrical contacts are preferably formed integrated in the carrier plate (17).

14. Optical transmitter and/or receiver module according to one of the preceding claims, **characterized in that** it is formed as a transceiver module with a plurality of electro-optical transmitter elements and one or more electric driver units for these and a plurality of optoelectric receiver elements and one or more electric amplifier units and **in that** the housing has a standardized form factor, in particular according to the QSFP (Quad Small Form-Factor Pluggable) or the QSFP+ (Quad Small Form-Factor Pluggable plus) standard.

## Revendications

1. Module optique d'émission et/ou de réception multicanal, en particulier pour des signaux optiques numériques à haut débit,
(a) comportant un boîtier (3) qui présente une pluralité de ports d'entrée optiques et/ou de ports de sortie optiques et dans lequel un ensemble électrique (13) et un module opto-électrique essentiellement en forme de plaque (15) connecté électriquement à l'ensemble électrique (13) sont prévus,
(b) une pluralité d'éléments d'émission électro-optiques et/ou une pluralité d'éléments de réception opto-électriques étant disposées dans ou sur le module opto-électrique (15),
(c) le module opto-électrique (15) présentant une région de couplage optique connectée à chaque première extrémité d'une pluralité de guides d'ondes optiques (23), et le module opto-électrique (15) présentant une pluralité de chemins optiques permettant la connexion optique d'une première extrémité respective de l'un des guides d'ondes optiques (23) à un élément d'émission électro-optique associé et/ou à un élément de réception opto-électrique associé, et
(d) le module opto-électrique (15) étant disposé dans un plan de module (E) qui s'étend obliquement par rapport à un axe longitudinal (L) du boîtier (3),
(e) l'axe longitudinal (L) du boîtier (3) et le plan de module (E) formant un angle α compris dans la plage de 20° ≤ α ≤ 50°, et
(f) la hauteur intérieure (h) du boîtier (3), dans au moins un plan de tous les plans perpendiculaires à un axe d'inclinaison (K) imaginaire du module opto-électrique (15), étant inférieure à l'étendue en longueur de la section transversale du module opto-électrique (15) dans ledit plan, au moins dans une région axiale dans laquelle le module opto-électrique (15) est prévu,
caractérisé en ce
(g) que la région de couplage optique est prévue sur l'une des deux plus grandes surfaces du module opto-électrique (15) et
(h) que les premières extrémités des guides d'ondes optiques (23) sont connectées perpendiculairement à la région de couplage du module opto-électrique (15).

2. Module optique d'émission et/ou de réception selon la revendication 1, **caractérisé en ce que** l'ensemble électrique (13) présente une plaque de support (17) pour des composants électriques, laquelle est disposée dans l'axe longitudinal (L) du boîtier (3) ou parallèlement à celui-ci et parallèlement à l'axe d'inclinaison (K) imaginaire du module opto-électrique (15).

3. Module optique d'émission et/ou de réception selon la revendication 1 ou 2, **caractérisé en ce qu'**une ou plusieurs unités d'entraînement électriques pour les éléments d'émission électro-optiques et/ou une ou plusieurs unités d'amplification électriques pour l'amplification des signaux électriques reçus depuis les éléments de réception opto-électriques sont en outre disposées dans ou sur le module opto-électrique (15).

4. Module optique d'émission et/ou de réception selon l'une des revendications précédentes, **caractérisé en ce que** le boîtier (3) présente une structure sensiblement cubique, l'axe longitudinal (L) du boîtier (3) s'étendant parallèlement aux côtés les plus longs d'un parallélépipède correspondant.

5. Module optique d'émission et/ou de réception selon l'une des revendications précédentes, **caractérisé en ce que** l'axe d'inclinaison (K) du module opto-électrique (15) s'étend perpendiculairement à l'axe longitudinal (L) du boîtier (3).

6. Module optique d'émission et/ou de réception selon l'une des revendications précédentes, **caractérisé en ce que** le module opto-électrique (15) est disposé dans la direction de l'axe longitudinal (L) du boîtier (3) à côté de l'ensemble électrique (13).

7. Module optique d'émission et/ou de réception selon l'une des revendications précédentes, **caractérisé en ce que** l'axe longitudinal (L) du boîtier (3) et les plans de module (E) forment un angle α compris dans la plage de 30° ≤ α ≤ 45°.

8. Module optique d'émission et/ou de réception selon l'une des revendications 4 à 6, **caractérisé en ce que**, dans une région d'extrémité du boîtier (3), de préférence la région d'extrémité du boîtier (3) au niveau de laquelle les côtés les plus longs respectifs de la structure cubique se terminent, un élément de support (27) est prévu, lequel est conçu à une extrémité tournée vers la face avant correspondante du boîtier (3) pour recevoir une unité à fiches multiples optique (31) et à une extrémité opposée pour le maintien incliné du module opto-électrique (15), la région de couplage optique du module opto-électrique (15) étant connectée aux premières extrémités du guide d'ondes optique (23) et des secondes extrémités du guide d'ondes optique (23) étant connectées à l'unité à fiches multiples optique (31).

9. Module optique d'émission et/ou de réception selon la revendication 8, **caractérisé en ce que** l'élément de support (27) présente deux bras (27a) s'étendant sensiblement parallèlement aux côtés les plus longs de la structure cubique et auxquels bras le module opto-électrique (15) est fixé, la région de couplage optique étant située dans un espace libre entre les deux bras et les guides d'ondes optiques (23) étant guidés dans ledit espace libre.

10. Module optique d'émission et/ou de réception selon l'une des revendications précédentes, **caractérisé en ce que** les premières extrémités des guides d'ondes optiques (23) sont connectées à la région de couplage du module opto-électrique (15) au moyen d'une virole multiple (25), où les extrémités des guides d'ondes optiques (23) sont fixées dans une position définie les unes par rapport aux autres.

11. Module optique d'émission et/ou de réception selon l'une des revendications 8 à 10, dans la mesure où la revendication 10 fait également référence à la revendication 8, **caractérisé en ce que** les secondes extrémités des guides d'ondes optiques (23) s'étendant parallèlement à l'axe longitudinal (L) du boîtier sont fixées dans une position définie les unes par rapport aux autres dans l'unité à fiches multiples optique (31), de préférence au moyen d'une virole multiple (31).

12. Module optique d'émission et/ou de réception selon l'une des revendications précédentes, **caractérisé en ce que** les guides d'ondes optiques (23) sont conçus sous forme de fibres de verre qui présentent une faible sensibilité aux macro-courbures dans la plage de longueurs d'onde d'intérêt, de préférence une atténuation supplémentaire qui est inférieure ou égale à 0,3 dB à un rayon de courbure de 5 mm et à un angle d'enroulement de 360°.

13. Module optique d'émission et/ou de réception selon l'une des revendications 8, 9 ou 11 ou l'une des revendications 10 ou 12, dans la mesure où celles-ci font également référence à la revendication 8, **caractérisé en ce qu'**un dispositif de fiche purement électrique (7) comportant une pluralité de contacts électriques est prévu sur une région d'extrémité opposée à la région d'extrémité du boîtier (3), sur laquelle l'unité à fiches multiples optique (31) est prévue, les contacts électriques étant de préférence conçus intégrés à la plaque de support (17).

14. Module optique d'émission et/ou de réception selon l'une des revendications précédentes, **caractérisé en ce qu'**il est conçu en tant que module émetteur-récepteur comportant une pluralité d'éléments d'émission électro-optiques et une ou plusieurs unités d'entraînement électriques pour ceux-ci et une pluralité d'éléments de réception opto-électriques et une ou plusieurs unités d'amplification électriques, et que le boîtier présente un facteur normalisé de forme, en particulier selon la norme QSFP (Quad Small Form-Factor Pluggable) ou la norme QSFP+ (Quad Small Form-Factor Pluggable plus).
